# FASCICULE DE BREVET EUROPEEN

(11) **EP 3 399 203 B1**
(45) Date de publication et mention de la délivrance du brevet: **13.11.2019**
(21) Numéro de dépôt: 18165486.4
(22) Date de dépôt: 03.04.2018
(51) Int. Cl.: F16D 7/02, F16D 9/02, F16D 43/25

(54) **SYSTEME D'ENTRAINEMENT COMMUTABLE**
SCHALTBARES ANTRIEBSSYSTEM
SWITCHABLE DRIVE SYSTEM

(30) Priorité: 03.04.2017 FR 1752863
(43) Date de publication de la demande: 07.11.2018
(73) Titulaire: ALSTOM Transport Technologies, 93400 Saint-Ouen (FR)
(72) Inventeur: ROBBE, Gilles, 25660 MONTFAUCON (FR); PERRIAU, Jean-François, 25000 BESANCON (FR)
(74) Mandataire: Lavoix

(56) Documents cités:
- EP-A1- 3 053 772
- JP-U- H0 538 426
- US-A- 3 889 789
- US-A1- 2010 273 562

## Description

La présente invention concerne un système d'entraînement selon le préambule de la revendication 1.

Un tel système d'entraînement est par exemple utilisé pour mettre en mouvement une machine tournante ou les roues d'un véhicule, particulièrement un véhicule ferroviaire.

En plus de transmettre le mouvement du moteur au dispositif tournant, le système de transmission de couple peut être agencé pour jouer le rôle de limiteur du couple transmis. Dans ce cas, lorsque le couple transmis dépasse une valeur seuil, il se produit un glissement de l'arbre par rapport au conduit interne. Le glissement provoque une rupture de l'élément d'obturation par cisaillement, ce qui vide la chambre. La rotation de l'arbre dans le conduit est alors libre et le couple n'est alors plus transmis au dispositif tournant.

Ce type de dispositifs permet de déconnecter le moteur de la transmission des roues dans un véhicule ferroviaire lorsque le couple transmis dépasse une valeur seuil déterminée pour minimiser l'endommagement de la transmission en cas d'accident.

Un tel dispositif est décrit dans le document US 2010/273562 A1.

Cependant, ces dispositifs peuvent être améliorés. En effet, dans le cas d'un véhicule ferroviaire, il existe d'autres causes accidentelles nécessitant la déconnexion du moteur et de la transmission des roues qu'un excès de couple transmis.

C'est notamment le cas, pour les moteurs électriques, de la formation d'un court-circuit dans l'espace interne, qui peut entraîner la formation d'un arc électrique dans le bobinage. Cet arc électrique provoque une surchauffe et entraîne l'arrêt automatique du moteur. Cependant, l'arbre est toujours entraîné par la rotation des roues, qui tournent en roue libre. La rotation de l'arbre, et donc du rotor, entretient l'arc électrique qui peut alors endommager gravement le moteur.

Un tel court-circuit n'entraine pas d'excès de couple transmis aux roues, et ne provoque donc pas la déconnexion du moteur. Il est donc souhaitable de fournir un dispositif assurant la protection du moteur lors d'un court-circuit entraînant la formation d'un arc électrique entretenu par la rotation des roues.

Un but de l'invention est ainsi de fournir un système d'entraînement assurant la déconnexion mécanique de l'arbre lors d'une surchauffe dans le moteur.

A cet effet, l'invention a pour objet un système d'entraînement selon la revendication 1.

Un tel système est apte à déconnecter l'arbre du moteur du dispositif tournant en cas de surchauffe du moteur, de sorte que la rotation du dispositif tournant n'est pas transmise en retour à l'arbre.

Selon des modes de réalisation particuliers, le système d'entraînement selon l'invention présente l'une ou plusieurs des caractéristiques des revendications 2 à 6, prise(s) isolément ou selon toute combinaison techniquement réalisable.

L'invention a également pour objet un véhicule ferroviaire selon la revendication 7.

L'invention a en outre pour objet un procédé de commutation selon la revendication 8.

Selon des modes de réalisation particuliers, le procédé selon l'invention présente l'une ou plusieurs des caractéristiques des revendications 9 et 10, prise(s) isolément ou selon toute combinaison techniquement réalisable.

L'invention sera mieux comprise à la lecture de la description qui va suivre, donnée uniquement à titre d'exemple et en référence aux dessins annexés, parmi lesquels :
- la figure 1 est une vue en perspective d'une partie d'un système d'entraînement selon l'invention ;
- la figure 2 est une vue en perspective du système de la figure 1 lors de la déconnexion de l'arbre et du dispositif tournant ;
- la figure 3 est une vue en perspective du dispositif des figures 1 et 2, après la déconnexion.

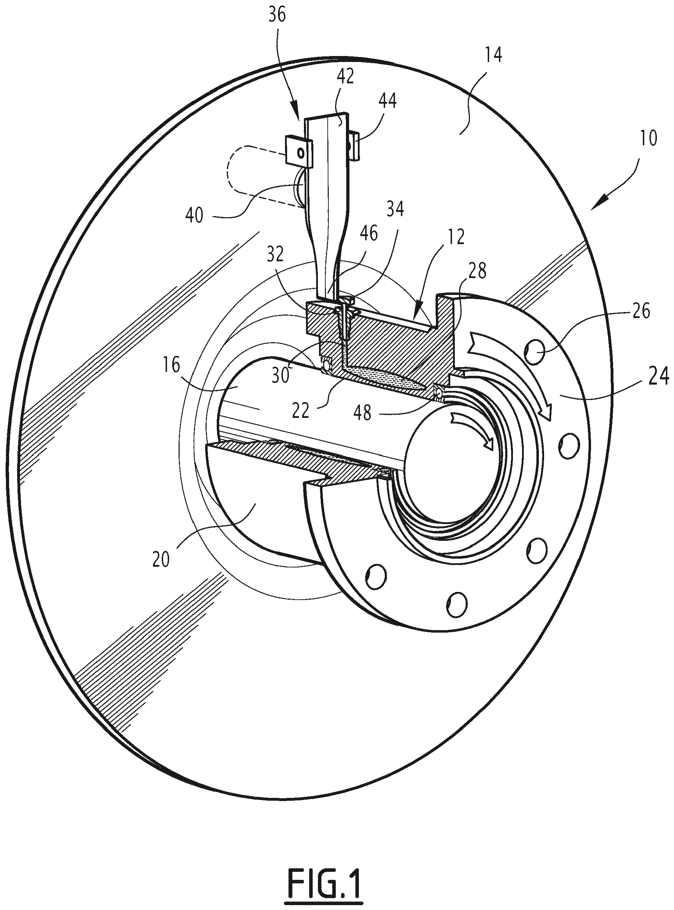

Un système d'entraînement 10 d'un dispositif tournant (non représenté) est partiellement représenté sur les figures 1 à 3. Le système d'entraînement 10 comprend un moteur électrique et un système de transmission 12. Le dispositif tournant est par exemple la transmission des roues d'un véhicule ferroviaire, ou un autre élément tournant du véhicule ferroviaire.

Le moteur électrique comprend, comme connu en soi, un rotor et un stator (non représentés), disposés dans un espace interne. L'espace interne est par exemple délimité par une carcasse métallique, fermée par un flasque 14.

Le rotor est porté par un arbre 16, mobile en rotation par rapport à la carcasse. L'arbre 16 s'étend jusqu'à l'extérieur de la carcasse, à travers une ouverture dans le flasque 14. L'arbre 16 est mis en rotation par l'interaction du rotor et du stator.

Le système de transmission 12 est agencé pour relier mécaniquement l'arbre 16 du moteur au dispositif tournant, afin de transmettre un couple de l'arbre 16 au dispositif tournant, par exemple pour mettre en mouvement le véhicule ferroviaire.

A cet effet, le système de transmission 12 comprend un manchon 20, présentant une surface interne 22 définissant un conduit de réception de l'arbre 16. Le manchon 20 présente également une extrémité 24, située l'écart du moteur, agencée pour être reliée mécaniquement au dispositif tournant.

L'extrémité 24 forme par exemple une bride présentant des orifices 26 de réception de moyens de fixation de la transmission des roues du véhicule ferroviaire.

Ainsi, le système de transmission 12 transmet la rotation du manchon 20 au dispositif tournant.

Le système de transmission comprend une chambre 28 annulaire intérieure définie dans le manchon 20, contenant un fluide, par exemple de l'huile. La chambre 28 s'étend tout autour du conduit de réception de l'arbre 16.

La chambre 28 débouche à l'extérieur du manchon 20 à travers un passage 30 se terminant par un port de vidage 32 s'ouvrant dans la paroi externe du manchon 20.

L'épaisseur de matériau du manchon 20 séparant la chambre 28 et la surface interne 22 est faible, de sorte que la surface interne 22 est déformable sous l'effet d'une pression du fluide contenu dans la chambre 28. Par exemple, l'épaisseur séparant la chambre 28 de la surface interne 22 est inférieure ou égale à 5 mm.

Le système de transmission 12 est apte à prendre une configuration de serrage, représentée sur la figure 1, dans laquelle la surface interne 22 est en appui contre l'arbre 16. La surface interne 22 exerce une pression radiale sur l'arbre 16 de façon à bloquer la rotation de l'arbre 16 par rapport au manchon 20, de sorte que le système de transmission 12 transmet le couple de l'arbre 16 au dispositif tournant. En configuration de serrage, le manchon 20 est donc mobile en rotation par rapport au flasque 14.

En configuration de serrage, le port de vidage 32 est bouché par un élément d'obturation 34, bloquant le fluide dans la chambre 28. Le fluide est pressurisé en configuration de serrage, et l'élément d'obturation est apte à bloquer un écoulement du fluide hors de la chambre 28. La pression interne de fluide dans la chambre 28 déforme alors la paroi interne 22, qui vient en appui contre l'arbre 16. En d'autres termes, la chambre 28 est agencée pour réduire le diamètre interne de la paroi interne 22 lorsqu'elle contient le fluide sous pression.

L'élément d'obturation 34 est solidaire du manchon 20 en rotation par rapport au flasque 14, suivant une trajectoire sensiblement circulaire, en configuration de serrage du système de transmission 12. C'est-à-dire que l'élément d'obturation 34 se déplace le long d'un cercle lorsque le manchon 20 se déplace en rotation.

Le système de transmission 12 comprend un dispositif de commutation 36 adapté pour commuter le système de transmission 12 depuis la configuration de serrage vers une configuration de libération lorsqu'une température interne dans le moteur électrique dépasse une température seuil prédéterminée.

La température dans le moteur électrique augmente par exemple à cause de la formation d'un arc électrique dans l'espace interne. La température seuil prédéterminée est par exemple comprise entre 120°C et 280°C.

Selon un mode de réalisation représenté sur les figures 1 à 3, le dispositif de commutation 36 comprend un vérin 40 et un bras 42 articulé. Le bras 42 est articulé par une première extrémité à une fourchette 44 fixée au flasque 14, et présente une extrémité libre 46, qui constitue un outil de cisaillement. Le bras 42 est articulé par rapport à la fourchette 44 autour d'un axe perpendiculaire à l'axe de rotation de l'arbre 16. Le vérin vient en contact avec le bras 42 entre la fourchette 44 et l'extrémité libre 46. Le déplacement de l'extrémité libre 46 est proportionnel à la course du vérin 40, de sorte que l'articulation du bras 42 autour de la fourchette 44 démultiplie la course du vérin 40.

Le vérin 40 est configuré, lorsque la température interne dans le moteur électrique dépasse le seuil prédéterminé, pour déplacer l'extrémité libre 46 sur la trajectoire de l'élément d'obturation 34.

Le vérin 40 est par exemple un thermo-vérin placé dans l'espace interne du moteur électrique, dont la course dépend de la température dans l'espace interne.

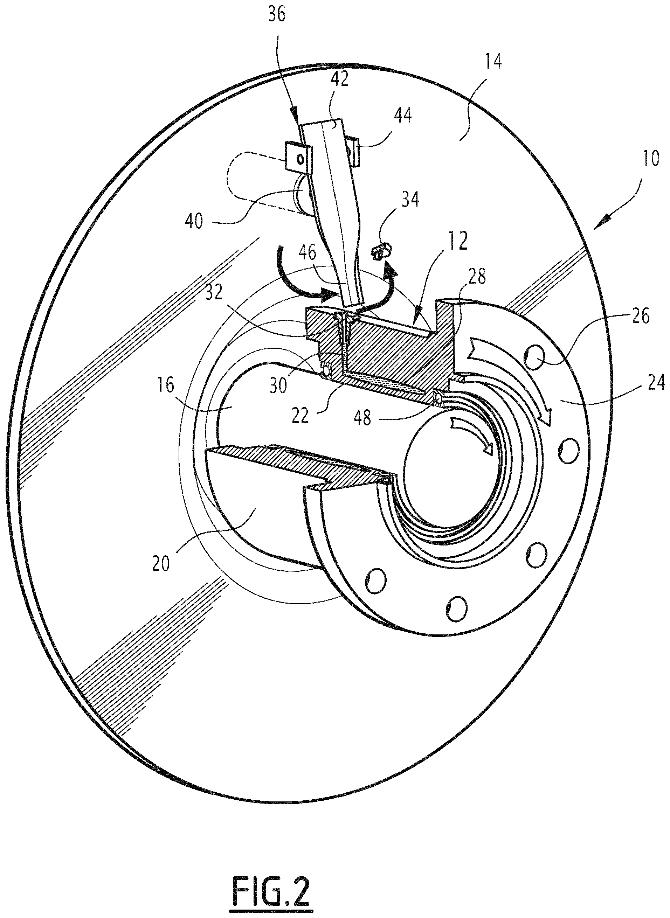

Lorsque l'extrémité libre 46 est placée sur la trajectoire de l'élément d'obturation 34, ce dernier vient heurter l'extrémité libre 46 et est détruit par cisaillement, comme représenté sur la figure 2. Par détruit, on entend que l'élément d'obturation 34 est déformé de manière irréversible et/ou séparé du port de vidage 32, de sorte qu'il ne bloque plus l'écoulement du fluide hors de la chambre 28. Le fluide s'écoule par le port de vidage 32 sous l'effet de la pression, ce qui commute le système de transmission 12 vers la configuration de libération.

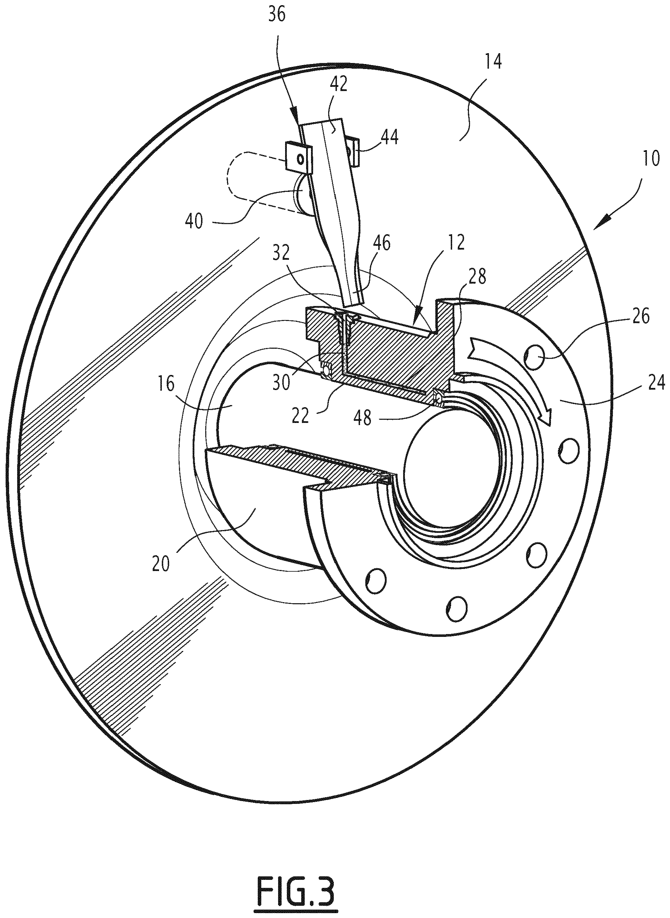

La configuration de libération du système de transmission 12 est représentée sur la figure 3. En configuration de libération, la surface interne 22 n'est plus déformée par la pression de fluide dans la chambre 28, et s'étend à l'écart de l'arbre 16, ou contre l'arbre 16 sans exercer sur celui-ci de pression suffisante pour bloquer sa rotation dans le manchon 20, de sorte que la rotation de l'arbre 16 par rapport au manchon 20 est libre. Le système de transmission 12 ne transmet alors plus le couple de l'arbre 16 au dispositif tournant, et ne transmet plus une éventuelle rotation du dispositif tournant à l'arbre 16. En d'autres termes, le diamètre de la surface interne 22 en configuration de libération est supérieur ou égal au diamètre le la surface interne 22 en configuration de serrage, de sorte que la surface interne 22 n'exerce pas de pression radiale sur l'arbre 16.

Avantageusement, le manchon 20 comprend au moins un palier de rotation 48, par exemple deux paliers de rotation 48, disposés dans le conduit interne. Chaque palier de rotation 48 comprend une bague interne disposée en appui sur l'arbre 16 et une bague externe disposée en appui sur la surface interne 22, séparées par une pluralité de billes de rotation. Ainsi, en configuration de libération, la rotation en roue libre relative de l'arbre 16 et du manchon 20 s'effectue sur les paliers de rotation 48, ce qui réduit les risques d'endommagement.

Le système de transmission 10 est ainsi apte à passer d'une configuration de serrage, dans laquelle il transmet le couple du moteur à la transmission des roues d'un véhicule ferroviaire, à une configuration de libération, dans laquelle il ne transmet pas la rotation des roues à l'arbre 16 du moteur. Cette commutation a lieu sous l'effet d'une élévation de température dans l'espace interne du moteur, résultant par exemple de la formation d'un arc électrique. La déconnexion mécanique de l'arbre 16 et de la transmission des roues permet de stopper la rotation de l'arbre 16, et donc du rotor du moteur, et de ne pas entretenir l'arc électrique.

Selon une première variante non représentée, le bras 42 porte un outil de cisaillement spécifique au niveau de son extrémité libre 46, plutôt que d'avoir l'extrémité libre 46 qui joue le rôle d'outil de cisaillement.

Selon une autre variante non représentée, le vérin 40 n'est pas un vérin thermostatique, et se situe hors de l'espace interne du moteur électrique. Le dispositif de commutation 36 comprend alors un capteur de température situé dans l'espace interne du moteur électrique, connecté au vérin 40 et pilotant la course du vérin 40.

Selon une autre variante non représentée, le dispositif de commutation 36 ne comprend pas de bras 42 articulé autour d'une fourchette 44, et l'outil de cisaillement est fixé directement au vérin 40.

Selon une autre variante non représentée, le vérin 40 est remplacé par un ressort, agencé avec une extrémité reliée au flasque 14 et une deuxième extrémité reliée au bras 42. Le ressort est retenu comprimé par un fil fusible, relié à la deuxième extrémité. Le fil fusible s'étend partiellement dans l'espace interne du moteur, de sorte que l'élévation de température dans l'espace interne du moteur détruit le fil fusible. Le ressort se détend alors et déplace le bras 42 de sorte que l'extrémité libre 46 est placée sur la trajectoire de l'élément d'obturation 34.

Le vérin 40 est configuré, lorsque la température interne dans le moteur électrique dépasse le seuil prédéterminé, pour déplacer l'extrémité libre 46 sur la trajectoire de l'élément d'obturation 34.

Le vérin 40 est par exemple un thermo-vérin placé dans l'espace interne du moteur électrique, dont la course dépend de la température dans l'espace interne.

Lorsque l'extrémité libre 46 est placée sur la trajectoire de l'élément d'obturation 34, ce dernier vient heurter l'extrémité libre 46 et est détruit par cisaillement, comme représenté sur la figure 2. Par détruit, on entend que l'élément d'obturation 34 est déformé de manière irréversible et/ou séparé du port de vidage 32, de sorte qu'il ne bloque plus l'écoulement du fluide hors de la chambre 28. Le fluide s'écoule par le port de vidage 32 sous l'effet de la pression, ce qui commute le système de transmission 12 vers la configuration de libération.

La configuration de libération du système de transmission 12 est représentée sur la figure 3. En configuration de libération, la surface interne 22 n'est plus déformée par la pression de fluide dans la chambre 28, et s'étend à l'écart de l'arbre 16, ou contre l'arbre 16 sans exercer sur celui-ci de pression suffisante pour bloquer sa rotation dans le manchon 20, de sorte que la rotation de l'arbre 16 par rapport au manchon 20 est libre. Le système de transmission 12 ne transmet alors plus le couple de l'arbre 16 au dispositif tournant, et ne transmet plus une éventuelle rotation du dispositif tournant à l'arbre 16. En d'autres termes, le diamètre de la surface interne 22 en configuration de libération est supérieur ou égal au diamètre le la surface interne 22 en configuration de serrage, de sorte que la surface interne 22 n'exerce pas de pression radiale sur l'arbre 16.

Avantageusement, le manchon 20 comprend au moins un palier de rotation 48, par exemple deux paliers de rotation 48, disposés dans le conduit interne. Chaque palier de rotation 48 comprend une bague interne disposée en appui sur l'arbre 16 et une bague externe disposée en appui sur la surface interne 22, séparées par une pluralité de billes de rotation. Ainsi, en configuration de libération, la rotation en roue libre relative de l'arbre 16 et du manchon 20 s'effectue sur les paliers de rotation 48, ce qui réduit les risques d'endommagement.

Le système de transmission 10 est ainsi apte à passer d'une configuration de serrage, dans laquelle il transmet le couple du moteur à la transmission des roues d'un véhicule ferroviaire, à une configuration de libération, dans laquelle il ne transmet pas la rotation des roues à l'arbre 16 du moteur. Cette commutation a lieu sous l'effet d'une élévation de température dans l'espace interne du moteur, résultant par exemple de la formation d'un arc électrique. La déconnexion mécanique de l'arbre 16 et de la transmission des roues permet de stopper la rotation de l'arbre 16, et donc du rotor du moteur, et de ne pas entretenir l'arc électrique.

Selon une première variante non représentée, le bras 42 porte un outil de cisaillement spécifique au niveau de son extrémité libre 46, plutôt que d'avoir l'extrémité libre 46 qui joue le rôle d'outil de cisaillement.

Selon une autre variante non représentée, le vérin 40 n'est pas un vérin thermostatique, et se situe hors de l'espace interne du moteur électrique. Le dispositif de commutation 36 comprend alors un capteur de température situé dans l'espace interne du moteur électrique, connecté au vérin 40 et pilotant la course du vérin 40.

Selon une autre variante non représentée, le dispositif de commutation 36 ne comprend pas de bras 42 articulé autour d'une fourchette 44, et l'outil de cisaillement est fixé directement au vérin 40.

Selon une autre variante non représentée, le vérin 40 est remplacé par un ressort, agencé avec une extrémité reliée au flasque 14 et une deuxième extrémité reliée au bras 42. Le ressort est retenu comprimé par un fil fusible, relié à la deuxième extrémité. Le fil fusible s'étend partiellement dans l'espace interne du moteur, de sorte que l'élévation de température dans l'espace interne du moteur détruit le fil fusible. Le ressort se détend alors et déplace le bras 42 de sorte que l'extrémité libre 46 est placée sur la trajectoire de l'élément d'obturation 34.

## Revendications

1. Système d'entraînement (10) d'un dispositif tournant comprenant un moteur électrique comprenant un arbre (16) mobile en rotation, ainsi qu'un système de transmission (12) de couple agencé pour relier l'arbre (16) du moteur au dispositif tournant, le système de transmission (12) comprenant :
- un manchon (20) présentant une surface interne (22) définissant un conduit de réception de l'arbre, le manchon (20) étant agencé pour être fixé au dispositif tournant ;
- une chambre (28) annulaire définie dans le manchon (20), débouchant sur l'extérieur du manchon (20) par un port de vidage (32), la chambre (28) contenant un fluide ; et
- un élément d'obturation (34) du port de vidage apte à bloquer un écoulement du fluide hors de la chambre (28),
le fluide contenu dans la chambre (28) étant pressurisé dans une configuration de serrage du système de transmission (12), de sorte que la surface interne (22) du conduit exerce une pression sur l'arbre (16) de façon à bloquer la rotation de l'arbre (16) par rapport au manchon (20), de sorte que le système de transmission (12) transmet le couple de l'arbre (16) au dispositif tournant,
l'élément d'obturation (34) ne bloquant pas l'écoulement du fluide hors de la chambre (28) dans une configuration de libération du système de transmission (12), de sorte que la surface interne (22) n'exerce pas de pression sur l'arbre (16), de sorte que la rotation de l'arbre (16) par rapport au manchon (20) est libre,
**caractérisé en ce que** le système de transmission (12) comprend un dispositif de commutation (36) adapté pour commuter le système de transmission (12) depuis la configuration de serrage vers la configuration de libération lorsqu'une température interne dans le moteur électrique dépasse une température seuil prédéterminée.

2. Système d'entraînement (10) selon la revendication 1, dans lequel le dispositif de commutation (36) comprend un vérin (40) et un outil de cisaillement, le vérin (40) étant configuré, lorsque la température interne dans le moteur électrique dépasse le seuil prédéterminé, pour déplacer l'outil de cisaillement sur une trajectoire de l'élément d'obturation (34) entraîné en rotation par le manchon (20) en configuration de serrage du système de transmission (12).

3. Système d'entraînement (10) selon la revendication 2, dans lequel le dispositif de commutation (36) comprend un bras (42) articulé démultipliant la course du vérin (40), une extrémité (46) du bras (42) portant ou constituant l'outil de cisaillement.

4. Système d'entraînement (10) selon l'une quelconque des revendications 2 ou 3, dans lequel le vérin (40) est un vérin thermostatique placé dans un espace interne du moteur électrique.

5. Système d'entraînement (10) selon l'une quelconque des revendications 2 ou 3, dans lequel le dispositif de commutation (36) comprend un capteur de température placé dans un espace interne du moteur électrique, le capteur de température pilotant le déplacement de l'outil de cisaillement par le vérin (40).

6. Système d'entraînement (10) selon l'une quelconque des revendications précédentes, dans lequel le manchon (20) comprend au moins un palier de rotation (48) disposé dans le conduit, le ou chaque palier de rotation (48) comprenant une bague externe disposée en appui sur la surface interne (22) du manchon (20) et une bague interne disposée en appui sur l'arbre (16).

7. Véhicule ferroviaire comportant au moins une roue et au moins un système d'entraînement selon l'une quelconque des revendications précédentes, l'arbre (16) du moteur électrique étant reçu dans le conduit, le manchon étant fixé à une transmission de la roue, de sorte que le système de transmission (12) transmet le couple de l'arbre (16) à la roue en configuration de serrage.

8. Procédé de commutation du système de transmission (12) de couple d'un système d'entraînement (10) selon l'une quelconque des revendications précédentes, comprenant les étapes suivantes :
- élévation de la température interne dans le moteur électrique au-dessus du seuil prédéterminé ;
- commutation du système de transmission (12) depuis la configuration de serrage vers la configuration de libération par le dispositif de commutation (36) ;
- écoulement du fluide pressurisé hors de la chambre (28) et déplacement de la surface interne (22) du conduit à l'écart de l'arbre (16) ; et
- rotation relative libre de l'arbre (16) par rapport au manchon (20).

9. Procédé de commutation selon la revendication 8, dans lequel l'étape de commutation comprend les étapes suivantes :
- déplacement de l'outil de cisaillement sur la trajectoire de l'élément d'obturation (34) par le vérin (40) ; et
- destruction de l'élément d'obturation (34) par l'outil de cisaillement, de sorte que l'élément d'obturation (34) ne bloque pas l'écoulement du fluide hors de la chambre (28).

10. Procédé de commutation selon l'une quelconque des revendications 8 et 9, dans lequel la rotation relative libre de l'arbre (16) par rapport au manchon (20) a lieu sur au moins un palier de rotation (48) disposé dans le conduit.

## Patentansprüche

1. System zum Antreiben (10) einer drehenden Vorrichtung, das einen elektrischen Motor mit einer drehbewegbaren Welle (16) aufweist, sowie ein Drehmoment-Übertragungssystem (12), das eingerichtet ist, um die Welle (16) des Motors mit der drehenden Vorrichtung zu verbinden, wobei das Übertragungssystem (12) aufweist:
- eine Hülse (20), die eine innere Fläche (22) hat, die einen Kanal zur Aufnahme der Welle definiert, wobei die Hülse (20) eingerichtet ist, um an der drehenden Vorrichtung befestigt zu sein,
- eine ringförmige Kammer (28), die in dem Kanal (20) definiert ist und die am Äußeren des Kanals (20) ausmündet über einen Entleerungsanschluss (32), wobei die Kammer (28) ein Fluid enthält, und
- ein Element zur Absperrung (34) des Entleerungs-Anschlusses, das imstande ist, ein Ausströmen des Fluid aus der Kammer (28) nach außen zu blockieren,
wobei das Fluid, das in der Kammer (28) enthalten ist, unter Druck steht in einer Verspann-Konfiguration des Übertragungssystems (12), so dass die innere Fläche (22) des Kanals einen Druck auf die Welle (16) ausübt, um die Drehung der Welle (16) relativ zu der Hülse (20) zu blockieren, so dass das Übertragungssystem (12) das Drehmoment der Welle (16) auf die drehende Vorrichtung überträgt,
wobei das Element zur Absperrung (34) das Ausströmen des Fluid aus der Kammer (28) nach außen nicht blockiert in einer Freigabe-Konfiguration des Übertragungssystems (12), sodass die innere Fläche (22) keinen Druck auf die Welle (16) ausübt, sodass Drehung der Welle (16) relativ zu der Hülse (20) frei ist,
**dadurch gekennzeichnet, dass** das Übertragungssystem (12) eine Umschaltungsvorrichtung (36) aufweist, die angepasst ist, um das Übertragungssystem (12) von der Verspann-Konfiguration aus in die Freigabe-Konfiguration umzuschalten, wenn eine innere Temperatur des elektrischen Motors eine vorbestimmte Temperatur-Schwelle überschreitet.

2. System zum Antreiben (10) gemäß Anspruch 1, wobei die Umschaltungsvorrichtung (36) einen Zylinder (40) und ein Abscherungswerkzeug aufweist, wobei der Zylinder (40) konfiguriert ist, um, wenn die innere Temperatur in dem elektrischen Motor die vorbestimmte Schwelle überschreitet, das Abscherungswerkzeug auf eine Bahn des Elements zur Absperrung (34) zu verlagern, das von der Hülse (20) in der Verspann-Konfiguration des Übertragungssystems (12) drehangetrieben ist.

3. System zum Antreiben (10) gemäß Anspruch 2, wobei die Umschaltungsvorrichtung (36) einen gelenkig gelagerten Arm (42) aufweist, der den Bewegungsweg des Zylinders (40) verstärkt, wobei ein Ende (46) des Arms (42) das Abscherungswerkzeug trägt oder ausbildet.

4. System zum Antreiben (10) gemäß irgendeinem der Ansprüche 2 oder 3, wobei der Zylinder (40) ein thermostatischer Zylinder ist, der in einem inneren Raum des elektrischen Motors angeordnet ist.

5. System zum Antreiben (10) gemäß irgendeinem der Ansprüche 2 oder 3, wobei die Umschaltungsvorrichtung (36) einen Temperatursensor aufweist, der in einem inneren Raum des elektrischen Motors angeordnet ist, wobei der Temperatursensor die Verlagerung des Abscherungswerkzeugs durch den Zylinder (40) steuert.

6. System zum Antreiben (10) gemäß irgendeinem der vorhergehenden Ansprüche, wobei die Hülse (20) wenigstens ein Drehlager (48) aufweist, das in dem Kanal angeordnet ist, wobei das oder jedes Drehlager (48) aufweist einen äußeren Ring, der an der inneren Fläche (22) der Hülse (20) anliegt, und einen inneren Ring, der an der Welle (16) anliegt ist.

7. Schienenfahrzeug mit wenigstens einem Rad und wenigstens einem System zum Antreiben gemäß irgendeinem der vorausgehenden Ansprüche, wobei die Welle (16) des elektrischen Motors in dem Kanal aufgenommen ist, wobei die Hülse an einer Übertragungsvorrichtung des Rads befestigt ist, so dass das Übertragungssystem (12) in der Verspann-Konfiguration das Drehmoment (16) auf das Rad überträgt.

8. Verfahren zum Umschalten des Drehmoment-Übertragungssystems (12) eines Systems zum Antreiben (10) gemäß irgendeinem der vorhergehenden Ansprüche, aufweisend die folgenden Schritte:
- Steigen der inneren Temperatur in einem elektrischen Motor über die vorbestimmte Schwelle,
- Umschalten des Übertragungssystems (12) von der Verspann-Konfiguration aus in die Freigabe-Konfiguration durch die Umschaltungsvorrichtung (36),
- Ausströmen des unter Druck stehenden Fluid aus der Kammer (28) nach außen und Verlagern der inneren Fläche (22) des Kanals in Abstand zu der Welle (16), und
- freies relatives Drehen der Welle (16) relativ zu der Hülse (20) .

9. Verfahren zum Umschalten gemäß Anspruch 8, wobei der Schritt des Umschaltens die folgenden Schritte aufweist:
- Verlagern des Abscherungswerkzeugs auf die Bahn des Elements zur Absperrung (34) mittels des Zylinders (40), und
- Zerstören des Elements zur Absperrung (34) durch das Abscherungswerkzeug, sodass das Element zur Abscherung (34) das Ausströmen des Fluid aus der Kammer (28) nach außen nicht blockiert.

10. Verfahren zum Umschalten gemäß irgendeinem der Ansprüche 8 und 9, wobei das relativ freie Drehen der Welle (16) relativ zu der Hülse (20) an wenigstens einem Drehlager (48) erfolgt, das in dem Kanal angeordnet ist.

## Claims

1. A drive system (10) for a rotary device comprising an electric motor comprising a rotatable shaft (16), as well as a torque transmission system (12) arranged to connect the shaft (16) of the motor to the rotary device, the transmission system (12) comprising:
- a sleeve (20) having an inner surface (22) defining a conduit for receiving the shaft, the sleeve (20) being arranged to be fastened to the rotary device;
- an annular chamber (28) defined in the sleeve (20), emerging on the outside of the sleeve (20) by an emptying port (32), the chamber (28) containing a fluid; and
- a closing off element (34) for closing off the emptying port able to block a flow of fluid outside the chamber (28),
the fluid contained in the chamber (28) being pressurized in a gripping configuration of the transmission system (12), such that the inner surface (22) of the conduit exerts pressure on the shaft (16) so as to block the rotation of the shaft (16) relative to the sleeve (20), such that the transmission system (12) transmits the torque from the shaft (16) to the rotary device,
the closing off element (34) not blocking the flow of fluid outside the chamber (28) in a released configuration of the transmission system (12), such that the inner surface (22) does not exert pressure on the shaft (16), such that the rotation of the shaft (16) relative to the sleeve (20) is free,
**characterized in that** the transmission system (12) comprises a switching device (36) suitable for switching the transmission system (12) from the gripping configuration to the released configuration when an internal temperature in the electric motor exceeds a predetermined threshold temperature.

2. The drive device (10) according to claim 1, wherein the switching device (36) comprises a jack (40) and a shearing tool, the jack (40) being configured, when the internal temperature in the electric motor exceeds the predetermined threshold, to move the shearing tool over a trajectory of the closing off element (34) rotated by the sleeve (20) in the gripping configuration of the transmission system (12).

3. The drive system (10) according to claim 2, wherein the switching device (36) comprises an articulated arm (42) reducing the travel of the jack (40), one end (46) of the arm (42) carrying or constituting the shearing tool.

4. The drive system (10) according to any one of claims 2 or 3, wherein the jack (40) is a thermostatic jack placed in an inner space of the electric motor.

5. The drive system (10) according to any one of claims 2 or 3, wherein the switching device (36) comprises a temperature sensor placed in an inner space of the electric motor, the temperature sensor controlling the movement of the shearing tool by the jack (40).

6. The drive system (10) according to any one of the preceding claims, wherein the sleeve (20) comprises at least one rotation bearing (48) positioned in the conduit, the or each rotation bearing (48) comprising an outer ring positioned resting on the inner surface (22) of the sleeve (20) and an inner ring positioned resting on the shaft (16).

7. A railway vehicle comprising at least one wheel and at least one drive system according to any one of the preceding claims, the shaft (16) of the electric motor being received in the conduit, the sleeve being fastened to a transmission of the wheel, such that the transmission system (12) transmits the torque from the shaft (16) to the wheel in the gripping configuration.

8. A method for switching the torque transmission system (12) of a drive system (10) according to any one of the preceding claims, comprising the following steps:
- elevation of the temperature inside the electric motor above the predetermined threshold;
- switching of the transmission system (12) from the gripping configuration toward the released configuration by the switching device (36);
- flowing of the pressurized fluid outside the chamber (28) and movement of the inner surface (22) of the conduit away from the shaft (16); and
- free relative rotation of the shaft (16) relative to the sleeve (20).

9. The switching method according to claim 8, wherein the switching step comprises the following steps:
- moving of the shearing tool over the trajectory of the closing off element (34) by the jack (40); and
- destruction of the closing off element (34) by the shearing tool, such that the closing off element (34) does not block the flow of the fluid outside the chamber (28).

10. The switching method according to any one of claims 8 and 9, wherein the free rotation of the shaft (16) relative to the sleeve (20) takes place over at least one rotation bearing (48) positioned in the conduit.
